# EUROPÄISCHE PATENTSCHRIFT

(11) **EP 2 377 787 B1**
(45) Veröffentlichungstag und Bekanntmachung des Hinweises auf die Patenterteilung: **20.03.2013**
(21) Anmeldenummer: 10004062.5
(22) Anmeldetag: 16.04.2010
(51) Int. Cl.: B65G 23/44, B65G 39/16

(54) **Bandfördereinrichtung**
Conveyer belt device
Dispositif de convoyeur de bande

(43) Veröffentlichungstag der Anmeldung: 19.10.2011
(73) Patentinhaber: Joseph Vögele AG, 67067 Ludwigshafen (DE)
(72) Erfinder: Buschmann, Martin, Dipl.-Ing., 67435 Neustadt (DE); Fickeisen, Steffen, 67098 Bad Dürkeim (DE); Letz, Andreas, 68259 Mannheim (DE); Neumann, Joschka, 68199 Mannheim (DE)
(74) Vertreter: Grünecker, Kinkeldey, Stockmair & Schwanhäusser

(56) Entgegenhaltungen:
- EP-A2- 0 870 870
- DE-U1- 20 210 626
- JP-A- 60 242 111
- JP-U- 3 125 722
- US-A- 2 914 957

## Beschreibung

Die Erfindung bezieht sich auf ein Förderband gemäß dem Oberbegriff des Patentanspruchs 1 und einen Straßenfertiger oder Beschicker gemäß dem Oberbegriff des Patentanspruchs 15.

In der Praxis werden zum Fördern von zähflüssigem Einbaugut wie bituminösem Einbaugut oder Betoneinbaugut, oder auch von Sand oder Kies, Förderbänder benutzt. Für Straßenfertiger oder Beschicker eignen sich Förderbänder besonders gut, um das Einbaugut von einem Materialbunker zu einer Einbaubohle zu transportieren. Förderbänder, die in Beschickern oder Straßenfertigern verbaut sind, sind schwer zugänglich, wodurch ein hoher Wartungsaufwand entsteht. Außerdem müssen die Förderbänder vor Arbeitsbeginn regelmäßig überprüft werden, ob eine ausreichende Förderbandspannung vorhanden ist bzw. ob eine dementsprechende Laufrichtung des Bandes gegeben ist, die zu keiner Beschädigung der Förderbandanlage führen kann.

Bekannte Bandanlagen werden mechanisch über eine Gewindespindel gespannt. Eine Gewindespindel kann links und rechts neben der Antriebstrommel angebracht sein, wobei vor Anlaufen der Bandanlage manuell die Stellung der Gewindespindeln eingestellt wird. Mit solch einer manuellen Einstellmöglichkeit kann auch der Bandlauf beeinflusst werden. Stellt sich während der Arbeit heraus, dass sich der Bandlauf verändert hat, muss manuell an der Gewindespindel nachjustiert werden. Problematisch ist, dass dazu der Straßenfertiger bzw. der Beschicker abgestellt werden muss, weil eine Korrektur während des Betriebes nicht möglich ist. Oft kommt es auch vor, dass ein Fehllauf des Förderbandes nicht rechtzeitig bemerkt wird. Dann kann es dazu kommen, dass das Förderband aus einer mittigen Position über die Führungsrollen herausläuft und dann am Förderbandgestell reibt. Durch einen derartigen Fehllauf, bei dem das Förderband am Fahrgestell reibt, kann es zur Beschädigung des Bandes kommen. Ebenfalls setzt das manuelle Einstellen der Gewindespindeln eine gewisse Routine voraus, die von Einsteller zu Einsteller unterschiedlich gegeben ist.

Die DE 697 06 861 T2 beschreibt eine mechanische Bandspurführungsanordnung, um den Lauf von Förderbändern zu regulieren. Die Bandlenkanordnung umfasst einen Lenkträger mit zwei Lenkrollen, um ein Förderband zu lenken, wenn es in seine Transportrichtung läuft. Dabei ist der Lenkträger drehbar bzw. schwenkbar an einem ersten Drehpunkt befestigt, der sich auf einem Balken bzw. Träger befindet. Ausserdem umfasst die Banklenkanordnung einen Führungsträger mit Führungsrollen, die angeordnet sind, um an jede der Außenseiten des Bandes anzuliegen. Dadurch kann eine seitliche Verschiebung des Förderbandes verhindert werden. Nachteilig daran ist, dass durch das Anlegen der Führungsrollen ein gewisser Reibverschleiß am Förderband entsteht und durch den erhöhten Laufwiderstand eine höhere Antriebsenergie benötigt wird.

Die US 2003/0045966 A1 bezieht sich auf eine Laufbandanordnung zur automatischen Zentrierung des Förderbandes. Dabei wird mittels Sensorik der Lauf des Bandes überwacht, wobei eine unerwünschte Laufrichtung detektiert werden kann, um die Stellung einer Antriebsrolle derartig zu verändern, dass das Laufband zurück zu seiner ursprünglichen Position läuft. Um den Lauf des Bandes zu kontrollieren, ist ein magnetisches Element im Band integriert, welches durch eine Sensoranordnung überwacht wird. Allerdings sind Förderbänder im Straßenbau einer hohen thermischen Belastung ausgesetzt und müssen wegen des schweren zu transportierenden Einbauguts große Zugspannungen aushalten. Daher ist es äußerst fraglich, ob eine Laufbandanordnung wie sie von der US 2003/0045966 A1 beschrieben wird für den Einsatz im Straßenbau geeignet ist.

Die DE 202 10 624 U1 beschreibt eine Spannvorrichtung für Förderbänder. Dabei wird über zwei Hydraulikzylinder eine Antriebsrolle beidseitig bespannt. Die Spannung des Förderbandes kann mittels Sensor überwacht werden, wobei bei einer nicht ausreichenden Spannung das hydraulische Spannsystem aktiviert wird. Dabei wird zunächst ein Differentialzylinder mit Druck beaufschlagt, welcher sich über eine Druckleitung auf den zweiten Differentialzylinder zeitgleich fortpflanzt, wodurch eine gleichzeitige Verschiebung auf beiden Seiten der Antriebsrolle stattfindet, um das Band gleichmäßig zu spannen.

Die JP 60 242111 A bezieht sich auf eine gattungsgemäße Bandfördereinrichtung mit Hydraulikzylindern, die ein Tragelement zum Führen des Förderbandes befestigen. Bei einem Fehllauf des Förderbandes können die Hydraulikzylinder unabhängig voneinander verstellt werden, sodass das Tragelement eine dem Fehllauf entgegenwirkende Schräglage einnimmt, wodurch der Lauf des Förderbandes korrigierbar ist.

Die DE 102 10 626 U1 beschreibt eine Bandfördereinrichtung, die eine Spanneinrichtung und eine manuell justierbare Stelleinrichtung umfasst. Die Stelleinrichtung kann genutzt werden, um die Spanneinrichtung manuell nachzujustieren, wodurch das Förderband nachgespannt bzw. einem seitlichen Weglaufen des Förderbandes vorab entgegengewirkt werden kann.

Die EP 0 870 870 A2 beschreibt eine Bandfördereinrichtung mit einer hydraulischen Stelleinrichtung. Die Stelleinrichtung umfasst hydraulische, mit einem Tragelement verbundende Stellzylinder, die unabhängig voneinander verstellt werden können, wodurch ein durch das Tragelement getragenes Band gespannt oder in seiner Bewegungsrichtung beeinflusst werden kann.

Die JP 3 125722 U bezieht sich auf eine Förderbandanlage, die den Lauf eines Förderbands regelt.

Der Erfindung liegt die Aufgabe zugrunde, eine automatische Spannungs- und Bandlaufregelung r für ein Förderband zu schaffen, wobei während des Laufs des Förderbands sichergestellt werden soll, dass das Förderband nicht so strapaziert wird, dass es beschädigt werden könnte.

Diese Aufgabe wird mit den Merkmalen der Patentansprüche 1 und 15 gelöst. Verbesserte Weiterbildungen sind durch die technischen Merkmale der Unteransprüche gegeben.

Die Erfindung betrifft eine Bandfördereinrichtung für einen Straßenfertiger oder Beschicker mit einem Förderband, an dem ein verschiebbar gelagertes Tragelement anliegt, und mit einer ersten und einer zweiten Kolbenzylindereinheit zum Verlagern des Tragelements, wobei insbesondere die erste und die zweite Kolbenzylindereinheit unabhängig voneinander mit Druck beaufschlagbar sind, um das Tragelement in eine gewünschte Schrägstellung zu bewegen.

Vorzugsweise werden Hydraulikzylinder verwendet, um das hoch belastete Tragelement zu verlagern, wodurch das Förderband in seinem Lauf beeinflusst bzw. ausreichend gespannt wird. Dabei kann der beaufschlagte Druck über Hydraulikventile variabel und automatisch gesteuert werden. Die auf das Förderband wirkende Spannkraft kann automatisch während des Betriebs verändert werden. Im Vergleich zu einer manuellen Justierung bzw. Korrektur der Förderbandspannung, kann dadurch viel Zeit eingespart werden und zusätzlich wird verhindert, dass sich ein Einsteller beim Justieren verletzt.

Das unabhängige Beaufschlagen der Kolbenzylindereinheiten mit Druck führt zu einer Verlagerung des Tragelements, wodurch einem unerwünschten Lauf des Förderbandes entgegengelenkt werden kann, um das Förderband in eine gewünschte Laufrichtung zurückzusetzen. Die Bandfördereinrichtung ist in der Lage einem Schrägziehen des Bandes entgegenzuwirken, bevor das Band soweit aus der Mitte läuft, dass es zu einer Beschädigung des Bandes kommen kann. Außerdem kann die Regulierung des Bandlaufs unabhängig von unterschiedlichen äußeren Einflüssen geschehen, wie z. B. einer Schräglage der Bandanlage oder einer Verschmutzung der Antriebstrommel. Ebenfalls kann durch die unabhängige Druckregelung der einzelnen Hydraulikzylinder die auf das Förderband wirkende Spannkraft während der Bandlaufregelung konstant gehalten werden. Obwohl die Bandfördereinrichtung gemäß der Erfindung durch schweres Fördergut einer hohen Belastung ausgesetzt ist, kann durch die hydraulische Vorrichtung das Band oder dessen Lauf feinfühlig und reaktionsschnell gespannt bzw. geregelt werden.

Bei einer zweckmäßigen Ausführungsform greifen die erste und die zweite Kolbenzylindereinheit seitlich neben dem Tragelement an. Dadurch kann das Tragelement besonders stabil gelagert werden.

Vorzugsweise können die Kolbenzylindereinheiten beidseitig mit Druck beaufschlagbar sein. Die Kolbenzylindereinheiten kommen dabei einem Differentialzylinder gleich, wodurch ein reaktionsschnelles Verstellen des Tragelements garantiert ist.

Die Kolbenzylindereinheiten können jeweils einen Zylinder umfassen, der sich ortsfest am Förderbandgestell abstützt. Alternativ kann der Zylinder auch am Fahrgestell des Beschickers bzw. des Straßenfertigers montiert werden, um zu verhindern, dass Schwingungen des Förderbandgestells auf den Zylinder übertragen werden.

Vorzugsweise umfasst der Zylinder Zylinderkammern, die geeignet sind, um hydraulische Drücke aufzunehmen. Dabei können die Zylinderkammern durch ihr Volumen variieren.

Bei einer zweckmäßigen Ausführungsform sind die Zylinderkammern durch eine steuerbare Druckleitung mit einer Druckquelle verbunden. Ein Übertragen von hydraulischen Kräften durch das hydraulische Fluid ist dadurch besonders gut möglich.

Vorzugsweise ist der Druck in den Zylinderkammern durch ein elektrisch ansteuerbares Hydraulikventil variabel und unabhängig voneinander steuerbar. Eine Schrägstellung des Tragelements ist dadurch unterschiedlich stark einstellbar.

Bei einer zweckmäßigen Ausführungsform folgt einem Druckanstieg in der Zylinderkammer der ersten Kolbenzylindereinheit ein Druckabfall in der Zylinderkammer der zweiten Kolbenzylindereinheit. Analog dazu folgt einem Druckabfall in der Zylinderkammer der ersten Kolbenzylindereinheit ein Druckanstieg in der Zylinderkammer der zweiten Zylinderkolbeneineinheit. Dadurch wird erreicht, dass sich das Tragelement gleichmäßig in eine Schrägstellung bewegt, wobei einem Auslenken eines ersten Endes des Tragelements, das mit der ersten Zylindereinheit verbunden ist, ein Einlenken am anderen Ende des Tragelements durch die zweite Kolbenzylindereinheit stattfindet.

Vorzugsweise umfassen die Kolbenzylindereinheiten jeweils eine Kolbenstange, die seitlich am Tragelement angreift. Die Kolbenstange kann eine Bewegung auf das Tragelement übertragen, wobei eine Bewegung der Kolbenstange zum Auslenken eines ersten Endes des Tragelements zu einer Bewegung der anderen Kolbenstange führt, die ein Einlenken des anderen Endes des Tragelements hervorruft.

Außerdem kann die Kolbenzylindereinheit einen Kolben mit einer Kolbenfläche umfassen, wobei der Kolben verschiebbar in der Kolbenzylindereinheit angeordnet ist. Durch den Kolben lassen sich hydraulische Kräfte direkt auf die Kolbenstange übertragen.

Bei einer zweckmäßigen Ausführungsform sind die Kolbenflächen durch eine steuerbare Druckleitung mit der Druckquelle verbunden, wobei ein beaufschlagter Druck auf die Kolbenflächen identisch sein kann. Dabei ergibt sich die Spannkraft aus den Flächenverhältnissen der Hydraulikzylinderkolben.

Vorzugsweise ist der Druck auf die Kolbenflächen in unterschiedlichen Druckstufen oder stufenlos einstellbar, wobei eine Stufe drucklos sein kann. Dadurch ist eine betriebsabhängige Einstellung der Förderbandspannung möglich.

Für die Kolbenzylindereinheit kann eine Steuereinrichtung mit einem Sensor zum Erfassen der Position des Bandes vorhanden sein. Dadurch ist die Position des Förderbandes während des Betriebs abrufbar.

Erfindungsgemäß umfasst die Kolbenzylindereinheit ein Wegmesssystem, um eine Winkelstellung des Tragelements zu überwachen. Somit wird vermieden, dass das Tragelement eine zu extreme Schrägstellung einnimmt.

Wie bereits oben erwähnt, ist bei der Bandfördereinrichtung gemäß der Erfindung der Bandlauf bzw. die Bandspannung je nach Betriebssituation automatisch steuerbar. Zusätzlich lässt sich die Bandspannung in Abhängigkeit von einer Schlupferfassung regeln. Vorzugsweise bietet die Bandfördereinrichtung die Möglichkeit eines Drehzahlvergleichs zwischen der Umlenktrommel und der Antriebstrommel bzw. zwischen der Antriebstrommel und des Förderbands. Dadurch kann ein Schlupf des Förderbandes erfasst werden, worauf eine Regelung der Spannung des Förderbandes resultiert.

Vorzugsweise ist die Kolben- und Stangenseite zum Spannen der Antriebstrommel bzw. zum Lenken des Bandlaufes nutzbar. Während der Bandlaufregelung ist die Spannkraft konstant.

Bei einer zweckmäßigen Ausführungsform ist die Breite der Antriebstrommel kleiner bzw. gleich der Förderbandbreite. Eine Beschmutzung der Oberfläche der Antriebstrommel ist damit nicht möglich.

Vorzugsweise ist eine definierte Normalstellung des Kolbens der Kolbenzylindereinrichtung bei ca. 2/3 der maximal ausgefahrenen Stellung.

Zum Erfassen der Förderbandspannung bzw. des Förderbandlaufs ist ein mechanischer, optischer, kapazitiver oder elektrischer Sensor anderer Art verwendbar bzw. kann der Sensor mittels Ultraschall die Position des Bandes ermitteln.

Bei einer weiteren zweckmäßigen Ausführungsform sind sämtliche Druckleitungen mit einer Druckbegrenzungseinrichtung versehen. Dadurch wird verhindert, dass auf das Förderband eine zu große Spannungskraft wirkt.

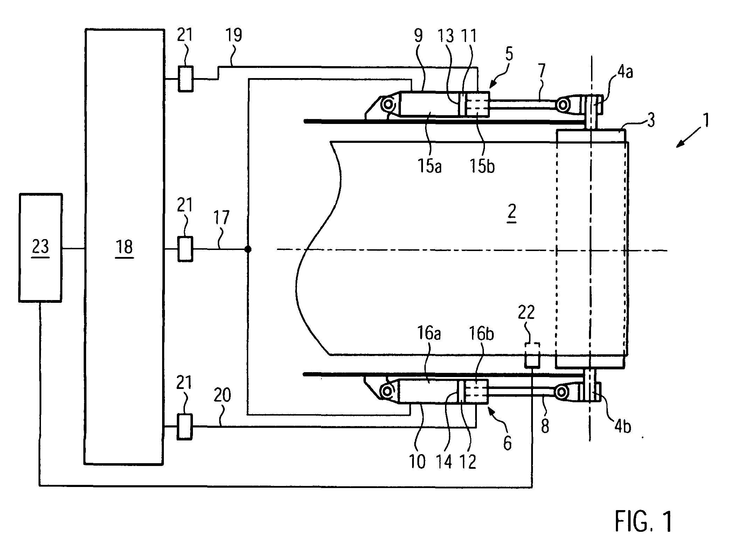

Die Figur 1 zeigt eine schematische Draufsicht der Bandfördereinrichtung gemäß der Erfindung.

Die Figur 1 zeigt eine Bandfördereinrichtung 1, wie sie bei Beschickern und Straßenfertigern zum Einsatz kommt. Die Bandfördereinrichtung 1 kann verwendet werden, um zähflüssiges Einbaugut zum Einbauort zu transportieren. Bei Straßenfertigern bzw. Beschickern sind Fördersysteme schwer zugänglich. Um die Fördersysteme zu justieren bzw. zu reinigen ist wegen der schweren Zugänglichkeit ein großer Aufwand nötig. Mit der Bandfördereinrichtung 1 kann der Wartungsaufwand bzw. der Justierungsaufwand erheblich reduziert werden.

Die Bandfördereinrichtung 1 umfasst ein Förderband 2, an dem ein verschiebbar gelagertes Tragelement 3 anliegt. Das Förderband 2 kann aus einem verstärktem Gummi oder Elastomer ausgebildet sein, und/oder aus einem Metallgewebe. Das Förderband 2 kann eine geringere Breite als das Tragelement 3 besitzen. Alternativ kann jedoch das Förderband 2 auch eine größere Breite als bzw. die gleiche Breite wie das Tragelement 3 haben.

Das Tragelement 3 kann entweder als Antriebsrolle oder als gewöhnliche Führungsrolle ausgebildet sein. Das Tragelement 3 umfasst seitliche Halterungen 4a, 4b, an welchen das Tragelement 3 drehbar und verstellbar gelagert ist. Über die Halterungen 4a, 4b ist das Tragelement mit einer hydraulischen Kolben-Zylinder-Einheit 5, 6 verbunden. Die beiden hydraulischen Kolbenzylindereinheiten 5, 6 lassen sich unabhängig voneinander mit Druck beaufschlagen, wodurch sich das Tragelement 3 in eine schräge Stellung verlagern lässt. Ein Schrägstellen des Tragelements 3 kann einem unerwünschten Lauf des Förderbandes 2 entgegenwirken und somit verhindern, dass das Förderband 2 vom Tragelement 3 seitlich abläuft.

Die Kolbenzylindereinheit 5, 6 ist durch eine Kolbenstange 7, 8 mit dem Tragelement 3 verbunden. Ein Ausfahren bzw. Einfahren der Kobenstange 7 bezweckt eine Verlagerung bzw. Drehung des Tragelements 3 um das Ende der Kolbenstange 8, welches mit der Aufhängung 4b verbunden ist. Analog dazu bewirkt ein Ausfahren bzw. Einfahren der Kolbenstange 8 eine Drehung bzw. Verlagerung des Tragelements 3 um das Ende der Kolbenstange 7, welches mit der Halterung 4a verbunden ist.

In einer anderen Ausführungsform bewirkt ein Ausfahren bzw. Einfahren der Kobenstange 7 ein gleichzeitiges Ausfahren bzw. Einfahren der Kolbenstange 8. Dabei dreht bzw. verlagert sich das Tragelement 3 um einen rotationssymmetrischen zentralen Punkt des Volumens des Tragelements 3.

Ein Zylinder 9, 10 der Kolbenzylindereinheit 5, 6 ist ortsfest mit dem Gestell der Bandfördereinrichtung 1 verbunden. Alternativ dazu kann der Zylinder 9, 10 mit dem Fahrgestell des Beschickers bzw. des Straßenfertigers fest verbunden sein. Um den Zylinder 9, 10 vor mechanischen Schwingungen zu isolieren, kann der Zylinder 9, 10 über eine Dämpfungseinheit (nicht gezeigt) mit dem Fahrgestell der Bandfördereinrichtung 1 oder dem Fahrgestell des Straßenfertigers bzw. Beschickers verbunden sein. Mechanische Schwingungen können somit nicht den Lauf bzw. die Stellung des Tragelements 3 beeinflussen.

Im Zylinder 9, 10 befindet sich ein verschiebbarer Kolben 11, 12. Der verschiebbare Kolben 11, 12 bildet eine Kolbenfläche 13, 14 aus. Auf der entgegengesetzten Seite ist der Kolben 11, 12 mit der Kolbenstange 7, 8 verbunden. Der Kolben 11, 12 unterteilt den Zylinder 9, 10 in Zylinderkammern 15a, 15b, 16a, 16b.

Die Zylinderkammern 15a, 16a sind über eine Druckleitung 17 mit einer Druckquelle 18 fluidtechnisch verbunden. In den Zylinderkammern 15a, 16a können identische Drücke wirken. Um eine Schrägstellung des Tragelements 3 zu erreichen, wird der Druck in der Zylinderkammer 16b über die Druckleitung 20 abgesenkt. Die Druckleitungen 19, 20 sind fluidtechnisch mit der Druckquelle 18 verbunden. Folglich stellt sich das Tragelement 3 gegen den Uhrzeigersinn schräg. Um dieser Schrägstellung entgegenzuwirken, wird der Druck in der Zylinderkammer 16b über die Druckleitung 20 angehoben. Gleichzeitig wird der Druck in der Zylinderkammer 15b über die Druckleitung 19 abgesenkt.

Alternativ kann beim Verdrängen der Druckflüssigkeit aus einer der Zylinderkammern 15a, 16a das Druckfluid zurück zur Druckquelle 18 geleitet werden, damit eine Kolbenbewegung einer Kolbenzylindereinheit 5, 6 nicht eine Kolbenbewegung der anderen Kolbenzylindereinheit 5, 6 bewirkt.

Um zu verhindern, dass ein Druck in den Druckleitungen 17, 19, 20 über einen Maximalwert steigt, umfassen diese jeweils eine Drucküberwachungseinheit 21. Mit der Drucküberwachungseinheit 21 lässt sich der zum Spannen des Förderbandes 2 verwendete Druck überwachen. Außerdem bietet die Drucküberwachungseinheit 21 eine Kontrolle des Drucks zur Bandlaufregelung.

Der Bandlauf wird mittels Sensoren 22 erfasst. Dabei kann eine mechanische, optische, ultraschallbasierende oder kapazitive Sensorik verwendet werden. Der Sensor 22 ist mit einer Steuereinheit 23 verbunden, die das Messergebnis auswertet. Das verarbeitete Sensorsignal wird von der Steuereinheit 23 benutzt, um die Druckquelle 18 zu steuern. Basierend auf dem Signal der Steuereinheit 23 kann die Druckquelle 18 die Hydraulik regeln. Weil der Sensor 22 ständig den Bandlauf überwacht, findet eine durchgehende Kontrolle und Regelung des Bandlaufs statt. Gleichzeitig wird überprüft, ob das Förderband 2 ausreichend gespannt ist.

Mindestens eine der hydraulischen Kolbenzylindereinheiten 5, 6 ist mit einem Wegmesssystem ausgestattet, damit der Spannweg überwacht wird. Dadurch kann die Bandfördereinrichtung 1 erkennen, ob das Tragelement 3 eine unzulässige Schrägstellung erreicht.

Wird die Kolbenstange 7, 8 ausgefahren, um eine Schrägstellung des Tragelements 3 zu erreichen, wirkt auf die Kolbenstange 7, 8 die Gewichtskraft des Tragelements 3. Diese Beanspruchung der Kobenstange 7, 8 kann sich jedoch negativ auf die Führung der Kolbenzylindereinheit 5,6 auswirken. Folglich ist in einer alternativen Ausführungsform der Erfindung eine zusätzliche Führung für die Kolbenstange 7, 8 vorgesehen, die die Kolbenstange 7, 8 im ausgefahrenen Zustand abstützt. Die Führung umfasst einen Ring, der die Kolbenstange 7, 8 umgibt und ein Bindeglied, das am Fahrgestell der Bandfördereinrichtung 1 befestigt ist bzw. am Fahrgestell des Beschickers oder des Straßenfertigers.

## Patentansprüche

1. Bandfördereinrichtung (1) für einen Straßenfertiger oder Beschicker mit einem Förderband (2), an dem ein verschiebbar gelagertes Tragelement (3) anliegt, das insbesondere als Antriebsrolle oder als Umlenkrolle ausgebildet ist, und mit einer ersten und einer zweiten hydraulischen Kolben-Zylinder-Einheit (5, 6) zum Verlagern des Tragelements (3), wobei die erste und die zweite hydraulische Kolben-Zylinder-Einheit (5, 6) unabhängig voneinander mit Druck beaufschlagbar sind, um das Tragelement (3) in eine gewünschte Schrägstellung zu bewegen,
**dadurch gekennzeichnet,**
**dass** mindestens eine der Kolben-Zylinder-Einheiten (5, 6) ein Wegmesssystem umfasst, um eine Winkelstellung des Tragelements (3) zu überwachen, und
**dass** eine Spannung des Förderbands (2) in Abhängigkeit von einer Schlupferfassung regelbar ist, wobei die Schlupferfassung vorzugsweise mittels eines Drehzahlvergleichs zwischen der Umlenkrolle und der Antriebsrolle bzw. zwischen der Antriebsrolle und des Förderbands (2) durchführbar ist.

2. Bandfördereinrichtung nach Anspruch 1, **dadurch gekennzeichnet, dass** die erste und die zweite Kolben-Zylinder-Einheit (5, 6) seitlich neben dem Tragelement (3) angreifen.

3. Bandfördereinrichtung nach Anspruch 1 oder 2, **dadurch gekennzeichnet, dass** die Kolben-Zylinder-Einheit (5, 6) beidseitig mit Druck beaufschlagbar ist.

4. Bandfördereinrichtung nach einem der Ansprüche 1 bis 3, **dadurch gekennzeichnet, dass** die Kolben-Zylinder-Einheit (5, 6) einen Zylinder (9, 10) umfasst, der sich ortsfest abstützt.

5. Bandfördereinrichtung nach Anspruch 4, **dadurch gekennzeichnet, dass** der Zylinder (9, 10) eine Zylinderkammer (15a, 15b, 16a, 16b) umfasst.

6. Bandfördereinrichtung nach Anspruch 5, **dadurch gekennzeichnet, dass** die Zylinderkammer (15b, 16b) durch eine steuerbare Druckleitung (19, 20) mit einer Druckquelle (18) verbunden ist.

7. Bandfördereinrichtung nach Anspruch 6, **dadurch gekennzeichnet, dass** ein Druck in den Zylinderkammern (15b, 16b) durch ein elektrisch ansteuerbares Hydraulikventil variabel und unabhängig voneinander einstellbar ist.

8. Bandfördereinrichtung nach einem der Ansprüche 5 bis 7, **dadurch gekennzeichnet, dass** einem Druckanstieg in der Zylinderkammer (15b) der ersten Kolben-Zylinder-Einheit (5) ein Druckabfall in der Zylinderkammer (16b) der zweiten Kolben-Zylinder-Einheit (6) folgt.

9. Bandfördereinrichtung nach einem der Ansprüche 5 bis 7, **dadurch gekennzeichnet, dass** einem Druckabfall in der Zylinderkammer (15b) der ersten Kolben-Zylinder-Einheit (5) ein Druckanstieg in der Zylinderkammer (16b) der zweiten Kolben-Zylinder-Einheit (6) folgt.

10. Bandfördereinrichtung nach einem der Ansprüche 1 bis 9, **dadurch gekennzeichnet, dass** die Kolben-Zylinder-Einheit (5, 6) eine Kolbenstange (7, 8) umfasst, wobei die Kolbenstange (7, 8) seitlich am Tragelement (3) angreift.

11. Bandfördereinrichtung nach einem der Ansprüche 1 bis 10, **dadurch gekennzeichnet, dass** die Kolben-Zylinder-Einheit (5, 6) einen Kolben (11, 12) mit einer Kolbenfläche (13, 14) umfasst, wobei der Kolben (11, 12) verschiebbar angeordnet ist.

12. Bandfördereinrichtung nach Anspruch 11, **dadurch gekennzeichnet, dass** die Kolbenflächen (13, 14) durch eine steuerbare Druckleitung (17) mit der Druckquelle (18) verbunden sind, wobei ein beaufschlagter Druck auf die Kolbenflächen (13, 14) identisch ist.

13. Bandfördereinrichtung nach Anspruch 12, **dadurch gekennzeichnet, dass** der Druck auf die Kolbenflächen (13, 14) in unterschiedlichen Druckstufen oder stufenlos einstellbar ist, wobei eine Stufe drucklos ist.

14. Bandfördereinrichtung nach einem der Ansprüche 1 bis 13, **dadurch gekennzeichnet, dass** eine Steuereinrichtung (23) für die Kolben-Zylinder-Einheit (5, 6) mit einem Sensor (22) zum Erfassen der Position des Bandes (2) vorgesehen ist.

15. Straßenfertiger oder Beschicker **gekennzeichnet durch** eine Bandfördereinrichtung (1) gemäß einem der vorigen Ansprüche.

## Claims

1. Belt conveyor device (1) for a road finisher or charger with a conveyor belt (2), to which a displaceably mounted support element (3) abuts, which is preferably provided as a driving or as a deflection drum, and with a first and a second hydraulic piston cylinder unit (5, 6) for displacing the support element (3),
the first and the second hydraulic piston cylinder unit (5, 6) are pressurised independently of each other in order to move the support element (3) into a desired inclined position,
**characterised in that**
at least one of the piston cylinder units (5, 6) comprises a displacement measurement system to monitor an angular position of the support element (3), and
tension of the conveyer belt (2) can be controlled depending on measurement of slip, wherein slip preferably can be measured by a rotational speed comparison between the driving drum and the deflection drum or between the driving drum and the conveyor belt (2).

2. Belt conveyor device according to claim 1, **characterised in that** the first and the second piston / cylinder units (5, 6) engage at the side adjacent to the support element (3).

3. Belt conveyor device according to claim 1 or 2, **characterised in that** the piston cylinder unit (5, 6) can be pressurised on both sides.

4. Belt conveyor device according to one of the claims 1 to 3, **characterised in that** the piston cylinder unit (5, 6) comprises a cylinder (9, 10) which is supported fixed.

5. Belt conveyor device according to claim 4, **characterised in that** the cylinder (9, 10) comprises a cylinder chamber (15a, 15b, 16a, 16b).

6. Belt conveyor device according to claim 5, **characterised in that** the cylinder chamber (15b, 16b) is connected to a pressure source (18) by a controllable pressure line (19, 20).

7. Belt conveyor device according to claim 6, **characterised in that** a pressure can be adjusted in the cylinder chambers (15b, 16b) variably and independently from each other by an electrically actuated hydraulic valve.

8. Belt conveyor device according to one of the claims 5 to 7, **characterised in that** an increase in pressure in the cylinder chamber (15b) of the first piston cylinder unit (5) is followed by a reduction in pressure in the cylinder chamber (16b) of the second piston cylinder unit (6).

9. Belt conveyor device according to one of the claims 5 to 7, **characterised in that** a reduction in pressure in the cylinder chamber (15b) of the first piston cylinder unit (5) is followed by an increase in pressure in the cylinder chamber (16b) of the second piston cylinder unit (6).

10. Belt conveyor device according to one of the claims 1 to 9, **characterised in that** the piston cylinder unit (5, 6) comprises a piston rod (7, 8) wherein the piston rod (7, 8) engages the support element (3) at the side.

11. Belt conveyor device according to one of the claims 1 to 10, **characterised in that** the piston cylinder unit (5, 6) comprises a piston (11, 12) with a piston area (13, 14), wherein the piston (11, 12) is displaceably arranged.

12. Belt conveyor device according to claim 11, **characterised in that** the piston areas (13, 14) are connected to the pressure source (18) by a controllable pressure line (17), wherein the pressure applied to the piston areas (13, 14) is identical.

13. Belt conveyor device according to claim 12, **characterised in that** the pressure on the piston areas (13, 14) is adjustable continuously or in various pressure steps, wherein one step is not pressurised.

14. Belt conveyor device according to one of the claims 1 to 13, **characterised in that** a control device (23) for the piston cylinder unit (5, 6) is provided with a sensor (22) for acquiring the position of the belt (2).

15. Road finisher or charger **characterised by** a belt conveyor device (1) according to one of the previous claims.

## Revendications

1. Dispositif à convoyeur à bande (1) pour un finisseur ou un alimentateur mobile avec un convoyeur à bande (2) sur lequel est appuyé un élément de support coulissant (3) qui est en particulier construit sous forme d'un rouleau d'entraînement ou d'un rouleau de renvoi, et avec des première et deuxième unités hydrauliques à piston et cylindre (5, 6) pour déplacer l'élément de support (3), dans lequel les première et deuxième unités hydrauliques à piston et cylindre (5, 6) peuvent être mises sous pression indépendamment l'une de l'autre pour déplacer l'élément de support (3) selon une inclinaison souhaitée,
**caractérisé**
**en ce qu'**au moins une des unités à piston et cylindre (5, 6) comporte un système de mesure de déplacement pour surveiller une position angulaire de l'élément de support (3), et
**en ce qu'**une tension du convoyeur à bande (2) est réglable en fonction d'une détection de patinage, dans lequel la détection de patinage est préférablement réalisable à l'aide d'une comparaison des vitesses de rotation du rouleau de renvoi et du rouleau d'entraînement, ou respectivement du rouleau d'entraînement et du convoyeur à bande (2).

2. Dispositif à convoyeur à bande selon la revendication 1, **caractérisé en ce que** les première et deuxième unités à piston et cylindre (5, 6) sont montées latéralement près de l'élément de support (3).

3. Dispositif à convoyeur à bande selon la revendication 1 ou 2, **caractérisé en ce que** l'unité à piston et cylindre (5, 6) peut être mise sous pression des deux côtés.

4. Dispositif à convoyeur à bande selon l'une des revendications 1 à 3, **caractérisé en ce que** l'unité à piston et cylindre (5, 6) comporte un cylindre (9, 10) qui est monté de façon fixe.

5. Dispositif à convoyeur à bande selon la revendication 4, **caractérisé en ce que** le cylindre (9, 10) comporte une chambre de cylindre (15a, 15b, 16a, 16b).

6. Dispositif à convoyeur à bande selon la revendication 5, **caractérisé en ce que** la chambre de cylindre (15b, 16b) est connectée par une conduite pressurisée contrôlable (19, 20) à une source de pression (18).

7. Dispositif à convoyeur à bande selon la revendication 6, **caractérisé en ce qu'**une pression dans les chambres de cylindre (15b, 16b) peut être réglée variablement et indépendamment par une vanne hydraulique à commande électrique.

8. Dispositif à convoyeur à bande selon l'une des revendications 5 à 7, **caractérisé en ce qu'**une augmentation de pression dans la chambre de cylindre (15b) de la première unité à piston et cylindre (5) survient après une diminution de pression dans la chambre de cylindre (16b) de la deuxième unité à piston et cylindre (6).

9. Dispositif à convoyeur à bande selon l'une des revendications 5 à 7, **caractérisé en ce qu'**une diminution de pression dans la chambre de cylindre (15b) de la première unité à piston et cylindre (5) survient après une augmentation de pression dans la chambre de cylindre (16b) de la deuxième unité à piston et cylindre (6).

10. Dispositif à convoyeur à bande selon l'une des revendications 1 à 9, **caractérisé en ce que** l'unité à piston et cylindre (5, 6) comporte une tige de piston (7, 8), dans lequel la tige de piston (7, 8) est montée latéralement sur l'élément de support (3).

11. Dispositif à convoyeur à bande selon l'une des revendications 1 à 10, **caractérisé en ce que** l'unité à piston et cylindre (5, 6) comporte un piston (11, 12) avec une surface de piston (13, 14), dans lequel le piston (11, 12) est agencé de manière coulissante.

12. Dispositif à convoyeur à bande selon la revendication 11, **caractérisé en ce que** les surfaces de piston (13, 14) sont connectées à une source de pression (18) par une conduite pressurisée contrôlable (17), dans lequel les pressions exercées sur les surfaces de piston (13, 14) sont identiques.

13. Dispositif à convoyeur à bande selon la revendication 12, **caractérisé en ce que** la pression sur les surfaces de piston (13, 14) peut être réglée par différents niveaux de pression ou en continu, dans lequel un niveau correspond à une pression nulle.

14. Dispositif à convoyeur à bande selon l'une des revendications 1 à 13, **caractérisé en ce qu'**un dispositif de commande (23) pour l'unité à piston et
cylindre (5, 6) est équipé d'un capteur (22) pour détecter la position de la bande (2).

15. Finisseur ou alimentateur mobile **caractérisé par** un dispositif à convoyeur à bande (1) selon l'une des revendications précédentes.
